# EUROPÄISCHE PATENTSCHRIFT

(11) **EP 0 581 208 B1**
(45) Veröffentlichungstag und Bekanntmachung des Hinweises auf die Patenterteilung: **06.05.1998**
(21) Anmeldenummer: 93111810.3
(22) Anmeldetag: 23.07.1993
(51) Int. Cl.: B29C 47/02, B29C 47/06

(54) **Vorrichtung zum Herstellen eines Metall-Kunststoff-Verbundrohres**
Device for manufacturing a metal-plastic composite tube
Dispositif de fabrication d'un tuyau composite métalplastique

(30) Priorität: 29.07.1992 DE 4225011
(43) Veröffentlichungstag der Anmeldung: 02.02.1994
(73) Patentinhaber: UNICOR SUHLER MASCHINENFABRIK GmbH, D-98544 Suhl (DE)
(72) Erfinder: Rahn, Horst, D-97437 Hassfurt (DE)
(74) Vertreter: Pöhlau, Claus, Dipl.-Phys.

(56) Entgegenhaltungen:
- EP-A- 0 024 220
- DE-A- 2 065 103
- DE-B- 1 039 224
- US-A- 2 632 205
- US-A- 3 376 181
- PATENT ABSTRACTS OF JAPAN vol. 13, no. 36 (M-790)(3384) 26. Januar 1989 & JP-A-63 246 224 (SUMITOMO ELECTRIC IND LTD) 13. Oktober 1988
- PATENT ABSTRACTS OF JAPAN vol. 7, no. 250 (M-254)(1395) 8. November 1983 & JP-A-58 136 425 (TAKEUCHI PRESS KOGYO K.K.) 13. August 1983
- PATENT ABSTRACTS OF JAPAN vol. 13, no. 287 (M-844)(3635) 30. Juni 1989 & JP-A-18 0 511 (SEKISUI CHEM CO LTD) 27. März 1989

## Beschreibung

Die Erfindung betrifft eine Vorrichtung zum kontinuierlichen Herstellen eines Metall-Kunststoff-Verbundrohres mit einer Extrusionsdüse mit zwei konzentrischen Ringkanälen zur Zuführung einer inneren Haftvermittler- und Kunststoffschicht in ein Metallrohr, welches aus einem Bandmaterial durch Einrollen und Längsverschweißen hergestellt ist, wobei die Außenwand der Extrusionsdüse als Gegenlager für einen Schweißkopf zum Verschweißen der Längskanten des eingerollten Bandmaterials zur Erzeugung des Metallrohres dient, und die beiden Ringkanäle für die innere Haftvermittler- und Kunststoffschicht sich in Strömungsrichtung getrennt bis zu ihrem Austritt aus der Extrusionsdüse erstrecken.

Aus der EP-B1 0 024 220 ist eine Vorrichtung zum kontunierlichen Herstellen eines Metall-Kunststoff-Verbundrohres mit einer Extrusionsdüse mit zwei konzentrischen Ringkanälen zur Zuführung einer inneren Haftvermittler- und Kunststoffschicht in ein Metallrohr, welches aus einem bandmaterial durch Einrollen und Längsverschweißen hergestellt ist, wobei die Außenwand der Extrusionsdüse als Gegenlager für einen Schweißkopf zum Verschweißen der Längskanten des eingerollten Bandmaterials zur Erzeugung des Metallrohres dient, bekannt. Dort wird die Verwendung ganz bestimmter Materialkombinationen empfohlen, nämlich Aluminium als Metall sowie ein gepfropftes Polyethylen als Haftvermittler zur Festlegung der inneren Kunststoffschicht an dem Aluminiumrohr. Um bei Verwendung derartiger Materialkombinationen eine zuverlässige Haftung der Schichten aneinander zu erreichen, ist gemäß dem Stand der Technik vorgesehen, daß die beiden konzentrischen Ringkanäle zwar getrennt gespeist werden, jedoch an ihrem stromabwärtigen Ende in einen einzigen, ringförmigen Auslaß auslaufen, d.h. also die innere Haftvermittler- und Kunststoffschicht gleichzeitig und gemeinsam auf das vorher durch Längsschweißen gebildete Aluminiumrohr aufgebracht werden.

Eine derartige Vorgehensweise mag zwar bei Einsatz der speziellen Materialien gem. EP-B1 0 024 220 möglich sein. Selbst in diesem Fall besteht jedoch die Gefahr, daß sich Haftvermittler und Kunststoff in ungewollter Weise vermischen. Besonders kritisch bei der bekannten Vorgehensweise ist jedoch, daß das Dickenverhältnis der beiden Schichten, nämlich Haftvermittlerschicht und innere Kunststoffschicht, im wesentlichen nur durch Einstellung der Drücke der jeweiligen Extruder vorbestimmt werden kann. Sollte sich aus irgendwelchen Gründen der Spritzdruck nur eines der Extruder verändern, ohne daß dies gleich bemerkt wird, ergibt sich unter Umständen eine so starke Veränderung der Dicke der jeweiligen inneren Schicht, daß durchaus Ausschuß erzeugt werden kann, wobei eine Überprüfung des fertigen Rohres bezüglich der Dicke der aufgebrachten Haftvermittler- und Kunststoffschicht mit vertretbarem Aufwand nur möglich ist, wenn das Rohr zerschnitten und damit zerstört wird. Derartige Überprüfungen nimmt man deswegen nur in größeren Abständen vor, was bedeutet, daß in der bekannten Weise hergestellte Rohre durchaus beachtliche Abschnitte nicht ausreichender Qualität umfassen können.

Eine Vorrichtung der eingangs genannten Art ist aus der US-A 3 376 181 bekannt. Dort wird die Kunststoffschicht mittels eines Vakuums an die mit einem Kleber beschichtete Innenoberfläche des Metallrohres angesaugt. Eine Kalibrierung des lichten Innendurchmessers der inneren Kunststoffschicht ergibt sich dort also nur entsprechend der Konstanz der Wanddicke des inneren Kunststoffrohres bei dessen Austritt aus der Extrusionsdüse. Eine davon unabhängige exakte Kalibrierung des lichten Innendurchmessers des Kunststoffrohres im Inneren des Metallrohres ist dort also nicht realisiert.

Der Erfindung liegt die Aufgabe zugrunde, eine Vorrichtung der eingangs erwähnten Art so weiterzubilden, daß ein wesentlich zuverlässigeres Arbeiten erreicht und der Ausschuß, insbesondere unbemerkter Ausschuß, entsprechend vermindert werden kann.

Zur Lösung dieser Aufgabe wird nach der Erfindung vorgeschlagen, eine gattungsgemäße Vorrichtung so weiterzubilden, daß in Fertigungsrichtung auf die Extrusionsdüse folgend und von dieser beabstandet ein den Innenquerschnitt des aus Metallrohr, Haftvermittler und Kunststoffschicht bestehenden Rohres verschließender Dichtstopfen angeordnet ist, wobei der Raum zwischen dem Ende der Extrusionsdüse und dem Dichtstopfen mit einer Druckgaszuführung versehen ist.

Hierdurch wird erreicht, daß die innere Kunststoffschicht möglichst fest an das Metallrohr angedrückt wird.

Bei der Vorrichtung gemäß der Erfindung ist dafür Sorge getragen, daß die Zuführung sowohl des Haftvermittlers als auch des Kunststoffes für die innere Kunststoffschicht über im wesentlichen die gesamte Strecke bis zur Innenseite des Metallrohres unabhängig voneinander erfolgen, so daß insbesondere keine vorzeitige Vermischung der beiden Schichten eintreten kann, was bedeutet, daß sich die zugeführte Menge von Haftvermittler einerseits und Kunststoff andererseits jeweils genau und unabhängig voneinander einstellen lassen. Man erhält somit Verbundrohre, die auch bei eventuellen Druckänderungen in den Extrudern im wesentlichen gleichbleibende Qualität besitzen, so daß die Ausschußmenge, insbesondere aber die Menge von nicht als Ausschuß ermittelten, jedoch mangelhafte Qualität aufweisenden Rohren erheblich vermindert werden kann.

Vorzugsweise ist die Ausbildung der Vorrichtung derart, daß die beiden Ringkanäle an einer gemeinsamen, quer zur Strömungsrichtung verlaufenden Stirnfläche der Extrusionsdüse enden, von wo aus sie dann in Richtung auf die Innenwand des aus dem Metallband gebildeten Metallrohres abgelenkt werden.

Die Druckgaszuführung ist vorteilhafterweise von einem Längskanal der Extrusionsdüse gebildet, der im Querschnitt der Extrusionsdüse gesehen innerhalb der beiden Ringkanäle für Haftvermittler- und Kunststoffschicht verläuft.

Wenn in dem Raum zwischen Ende der Extrusionsdüse und Dichtstopfen mittels Druckgas ein ausreichender Überdruck erzeugt wird, wird einerseits die innere Kunststoffschicht und damit die Haftvermittlerschicht zuverlässig nach außen abgelenkt und an die Innenseite des Metallrohres angedrückt. Andererseits läßt sich durch entsprechende Einstellung des Überdruckes in dem Raum zwischen Ende der Extrusionsdüse und Dichtstopfen die Kraft, mit der die innere Kunststoffschicht an das Metallrohr gedrückt wird variieren. Zusätzlich kann sogar auf die Position, in der die Haftvermittlerschicht und innere Kunststoffschicht zur Anlage an die Innenseite des Metallrohres gelangt, Einfluß genommen werden, weil die Ablenkung der Kunststoffschicht nach dem Austritt aus der Extrusionsdüse um so stärker bzw. früher erfolgt, je höher der Überdruck in dem Raum zwischen Ende der Extrusionsdüse und Dichtstopfen ist.

Der besondere Vorzug des Vorhandenseins eines Dichtstopfens ist darin zu sehen, daß der benötigte innere Formdruck nur im Bereich zwischen Düsenende und Dichtstopfen herrscht, das restliche, gefertigte Rohr jedoch über die weitere Produktionsstrecke drucklos ist. Bei den bisherigen Vorrichtungen, bei denen kein Dichtstopfen vorgesehen ist, muß das gesamte Rohr unter Druck stehen, wozu das Rohr an seinem Ende abgequetscht werden muß, was vor allem dann, wenn es durchgeschnitten wird, problematisch ist, weil das Rohr jeweils vor dem Durchschneiden erneut abzuquetschen ist, um den Druck aufrecht zu erhalten. Derartige zusätzliche Maßnahmen können allein durch die Verwendung des Dichtstopfens entfallen. Darüberhinaus kann Energie eingespart werden, weil wesentlich weniger Druckluft bei der Vorrichtung gem. der Erfindung im Vergleich zu einer Vorrichtung verbraucht wird, bei der das Rohr erst im Bereich des Endes der Produktionsstrecke durch Abquetschen abgedichtet wird.

Eine kontinuierliche Fertigung des Verbundrohres unter zuverlässiger Verschweißung des Metallbandes zum Metallrohr läßt sich dann erzielen, wenn der Schweißkopf wenigstens eine Schweißrolle, vorzugsweise zur Ultraschallschweißung, umfaßt.

Für eine Vielzahl von Anwendungsgebieten ist es günstig, wenn entsprechende Verbundrohre nicht nur innen- sondern auch außenseitig eine Kunststoffschicht aufweisen. Um dies zu ermöglichen, wird vorteilhafterweise die Vorrichtung nach der Erfindung derart weitergebildet, daß in Fertigungsrichtung des Rohres nach der Extrusionsdüse in an sich bekannter Weise ein Querspritzkopf zum Umspritzen des Metallrohres mit einer Kunststoffschicht angeordnet ist.

Entsprechend dem Grundgedanken der Erfindung wird der Querspritzkopf dann vorteilhafterweise derart ausgebildet, daß er zwei über ihre gesamte Länge getrennte Zufuhrkanäle für Haftvermittler und Kunststoff zur Außenseite des Metallrohres aufweist, wobei die Zufuhrkanäle für Haftvermittler und Kunststoff sich vorzugweise in Strömungsrichtung konisch verjüngend ausgebildet sind.

Die Vorrichtung nach der Erfindung läßt sich, auch wenn einerseits Ringkanäle zur Anbringung einer inneren Haftvermittler- und Kunststoffschicht sowie andererseits Kanäle zur Anbringung einer äußeren Haftvermittler- und Kunststoffschicht vorgesehen sind relativ platzsparend und mit geringer Erstreckung in Fertigungsrichtung bauen. Vor allem deswegen ist es günstig, wenn jeweils ein gemeinsamer Extruder für innere und äußere Haftvermittlerschicht einerseits und/oder innere und äußere Kunststoffschicht andererseits vorgesehen ist.

Ein bevorzugtes Ausführungsbeispiel der Erfindung ist in der Zeichnung dargestellt und wird nachfolgend beschrieben. Es zeigen:
- Fig. 1: eine Draufsicht auf die Vorrichtung, wobei das Verbundrohr bzw.dessen Schichten schematisch angedeutet sind und
- Fig. 2: einen Vertikalschnitt durch die Vorrichtung während der Herstellung eines Verbundrohres.

Die Vorrichtung gemäß dem Ausführungsbeispiel dient zur Herstellung eines Verbundrohres, welches eine innere Metallschicht umfaßt, die sowohl innen- als auch außenseitig mit einer Kunststoffschicht versehen ist, wobei jeweils zwischen der Metallschicht und der Kunststoffschicht eine Haftvermittlerschicht angeordnet ist.

Wie die Zeichnungen deutlich erkennen lassen, umfaßt die dargestellte Vorrichtung zwei Spritzköpfe, nämlich einen ersten Spritzkopf 1 zur Ausbildung der inneren Haftvermittler- und Kunststoffschicht sowie einen zweiten Spritzkopf 2 zur Erstellung der äußeren Haftvermittler- und Kunststoffschicht, wobei es sich bei beiden Spritzköpfen 1 und 2 um Querspritzköpfe handelt, die an einem gemeinsamen Gestell 3 angeordnet sind.

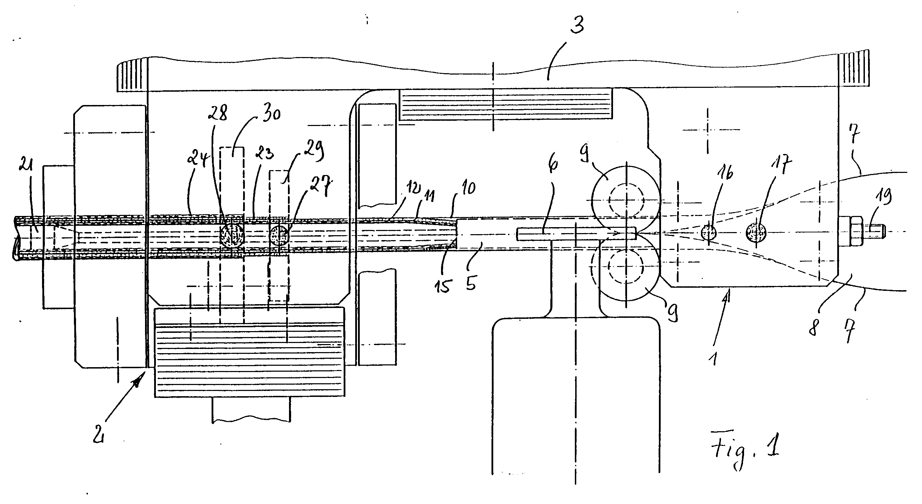

Der erste Spritzkopf 1 weist eine im wesentliche eine zylindrische Außenwand 4 umfassende Extrusionsdüse 5 auf. Die Außenwand 4 der Extrusionsdüse 5 dient als Gegenlager für eine Schweißrolle 6, mittels derer die sich überlappenden Kanten 7 eines das Metallrohr bildenden Metallbandes 8 miteinander in an sich bekannter Weise verschweißt werden, wobei das Einrollen und Zusammenführen der Kanten 7 des Metallrohres 8 durch Schließrollen 9 bewirkt wird. Aus dem Metallband 8 wird somit mittels der Schließrollen 9 und der Schweißrolle 6 ein Metallrohr 10 (Fig. 1) gebildet, dessen Innendurchmesser im wesentlichen dem Außendurchmesser der Extrusionsdüse 5 entspricht.

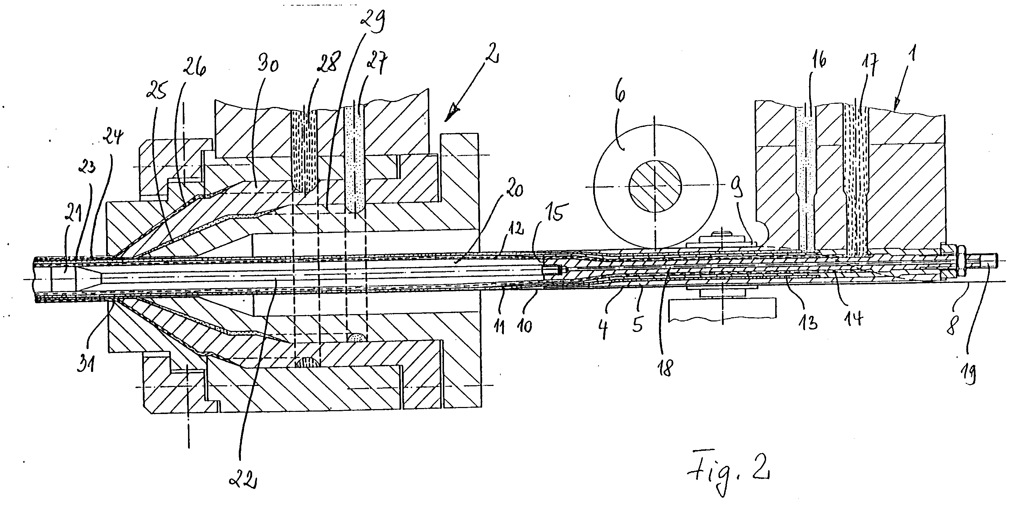

Zur Ausbildung der inneren Haftvermittlerschicht 11 und der inneren Kunststoffschicht 12 ist die Extrusionsdüse 5 mit zwei im wesentlichen konzentrischen Ringkanälen 13, 14 versehen (Fig. 2) die sich zu ihrem Austrittsende zu etwas erweitern und jeweils bis zur endseitigen Stirnfläche 15 der Extrusionsdüse 5 führen, wo sie in den Raum innerhalb des Metallrohres 10 münden. Die Zuführung von Haftvermittler bzw. Kunststoff zu den Ringkanälen 13, 14 erfolgt von einem nicht dargestellten Extruder aus über die radialen Bohrungen 16 bzw. 17.

Im Zentrum der Extrusionsdüse 5 ist ein Längskanal 18 vorgesehen, der mit einem Druckmittel-, z.B. Druckluftanschluß 19 in Verbindung steht und über den mit Hilfe nicht gezeigter Austrittsöffnungen Druckmittel, vorzugsweise Druckluft in den Raum 20 zwischen der Stirnfläche 15 der Extrusionsdüse 5 und der aus der Extrusionsdüse ausgetretenen inneren Kunststoffschicht 12 eingebracht werden kann.

Der Raum 20 ist in Fertigungsrichtung in Abstand von der Stirnfläche 15 der Extrusionsdüse 5 mittels eines Dichtstopfes 21 verschlossen, wobei der Dichtstopfen 21 z.B. über eine Stange 22 an der Extrusionsdüse 5 befestigt sein kann. Außenform und -Abmessungen des Dichtstopfens 21 sind so gewählt, daß er dem inneren Querschnitt des Verbundrohres entspricht, was gleichzeitig bedeutet, daß der Dichtstopfen 21 auch zur Glättung der von der inneren Kunststoffschicht 12 gebildeten Innenwand des Rohres dient. Zu diesem Zweck kann der Dichtstopfen 21 - abhängig von dem verwendeten Kunststoff und den erforderlichen Arbeitstemperaturen - auch heiz- oder kühlbar sein.

In Fertigungsrichtung anschließend an den Bereich, wo die innere Haftvermittlerschicht 11 bzw. innere Kunststoffschicht 12 auf das Metallrohr 10 aufgebracht werden, wird dann noch eine äußere Haftvermittlerschicht 23 sowie eine äußere Kunststoffschicht 24 aufgebracht, wozu der zweite Spritzkopf 2 dient, der ebenfalls mit zwei Ringkanälen 25 bzw. 26 ausgestattet ist, denen über Querbohrungen 27, 28 und Verteiler 29, 30 Haftvermittler (über die Bohrung 27) bzw. Kunststoff (über die Bohrung 28) für die äußeren Schichten zugeführt werden.

Aus Figur 2 ist in diesem Zusammenhang deutlich ersichtlich, daß auch die Ringkanäle 25, 26 entsprechend getrennt bis zum Austritt in die Zentralbohrung 31 des Spritzkopfes 2, wo die Schichten um das Metallrohr 10 herum gebildet werden, geführt sind. Außerdem verjüngen sich die Ringkanäle 25, 26 jeweils zu ihrem Austrittsende zu konisch.

Die Zufuhr von Haftvermittler zu den Querbohrungen 16 und 27 sowie Kunststoff zu den Querbohrungen 17 sowie 28 der Spritzköpfe 1 bzw. 2 kann grundsätzlich in beliebiger Weise, d.h. von jeweils getrennten Quellen erfolgen. Im Hinblick darauf, daß die Vorrichtung gem. der Erfindung jedoch sehr kurz baut, ist es ohne weiteres auch möglich, über entsprechende Verteiler die Querbohrungen 16 und 27 für Haftvermittler bzw. 17 und 28 für den Kunststoff der inneren bzw. äußeren Kunststoffschicht aus einem gemeinsamen Extruder zu speisen, wobei vor allem eine gemeinsame Speisung der Querbohrungen 16, 27 für den Haftvermittler im allgemeinen erfolgen wird, während es gleichzeitig auch möglich ist, die innere Kunststoffschicht 12 und die äußere Kunststoffschicht 24 aus unterschiedlichen Kunststoffen herzustellen, in welchem Falle natürlich die Spreizung ausgehend von getrennten Extrudern erfolgen muß.

Bei der Herstellung eines Verbundrohres mit der Vorrichtung nach der Erfindung wird zuerst, wie vor allem Figur 1 deutlich erkennen läßt, das Metallband 8 über die Schließrollen 9 und entsprechende, nicht dargestellte Führungsglieder so eingerollt, daß die Kanten 7 des Metallbandes 8 auf der Außenwand 4 der Extrusionsdüse 5 einander überlappend bzw. eng aneinander stoßend verlaufen. Es werden dann diese Kanten 7 mittels der Schweißrolle 6, beispielsweise im Wege der Ultraschall-Verschweißung, miteinander verbunden, so daß auf der Extrusionsdüse 5 ein Metallrohr 10 gebildet wird.

Das von der Extrusionsdüse 5 ablaufende Metallrohr 10 wird dann über den Ringkanal 13 der Extrusionsdüse 5 innenseitig mit der Haftvermittlerschicht 11 und über den Ringkanal 14 der Extrusionsdüse 5 mit der inneren Kunststoffschicht 12 versehen. Um eine sichere Haftung der Haftvermittlerschicht 11 bzw. der inneren Kunststoffschicht 12 an der Innenseite des Metallrohres 10 zu erreichen, wird in den Raum 20 innerhalb der inneren Kunststoffschicht 12 und zwischen Stirnfläche 15 der Extrusionsdüse 5 und Stopfen 21 ein Druckgas, z.B. Preßluft, mittels des Längskanals 18 eingeführt, wobei in dem Raum 20 beispielsweise ein Überdruck von 6 bar erzeugt werden kann.

Sobald die innere Haftvermittlerschicht 11 und die innere Kunststoffschicht 12 auf der Innenseite des Metallrohres 10 angebracht sind, tritt das Gebilde in die entsprechend abgestufte Zentralbohrung 31 des zweiten Spritzkopfes 2 ein, wo über die Ringkanäle 25 bzw. 26 in entsprechender Weise die äußere Haftvermittlerschicht 23 und die äußere Kunststoffschicht 24 zugeführt bzw. ausgebildet werden.

An den in der Zeichnung dargestellten Teil der Fertigungslinie schließen sich dann in an sich bekannter Weise noch ein Kalibrator, eine Wasserkühlstrecke und ein Haspel zum Aufrollen des fertigen Verbundrohres an.

## Patentansprüche

1. Vorrichtung zum kontinuierlichen Herstellen eines Metall-Kunststoff-Verbundrohres mit einer Extrusionsdüse (5) mit zwei konzentrischen Ringkanälen (13, 14) zur Zuführung einer inneren Haftvermittler- und Kunststoffschicht (11, 12) in ein Metallrohr, welches aus einem Bandmaterial (8) durch Einrollen und Längsverschweißen hergestellt ist, wobei die Außenwand der Extrusionsdüse (5) als Gegenlager für einen Schweißkopf (6) zum Verschweißen der Längskanten des eingerollten Bandmaterials (8) zur Erzeugung des Metallrohres dient, und die beiden Ringkanäle (13, 14) für die innere Haftvermittler(11) und Kunststoffschicht (12) sich in Strömungsrichtung getrennt bis zu ihrem Austritt aus der Extrusionsdüse (5) erstrecken,
**dadurch gekennzeichnet,**
daß in Fertigungsrichtung auf die Extrusionsdüse (5) folgend und von dieser beabstandet ein den Innenquerschnitt des aus Metallrohr (10), Haftvermittler (11) und Kunststoffschicht (12) bestehenden Rohres verschließender Dichtstopfen (21) angeordnet ist, wobei der Raum (20) zwischen dem Ende (15) der Extrusionsdüse (5) und dem Dichtstopfen (21) mit einer Druckgaszuführung (18) versehen ist.

2. Vorrichtung nach Anspruch 1,
**dadurch gekennzeichnet,**
daß die beiden Ringkanäle (13, 14) an einer gemeinsamen, quer zur Strömungsrichtung verlaufenden Stirnfläche (15) der Extrusionsdüse (5) enden.

3. Vorrichtung nach Anspruch 1,
**dadurch gekennzeichnet,**
daß die Druckgaszuführung von einem Längskanal (18) der Extrusionsdüse (5) gebildet ist, der im Querschnitt der Extrusionsdüse (5) gesehen innerhalb der beiden Ringkanäle (13, 14) für die Haftvermittler- (11) und Kunststoffschicht 12) verläuft.

4. Vorrichtung nach einem der vorhergehenden Ansprüche,
**dadurch gekennzeichnet,**
daß der Schweißkopf wenigstens eine Schweißrolle (6) vorzugsweise zur Ultraschallschweißung, umfaßt.

5. Vorrichtung nach einem der vorhergehenden Ansprüche,
**dadurch gekennzeichnet,**
daß in Fertigungsrichtung des Rohres nach der Extrusionsdüse (5) in an sich bekannter Weise ein Querspritzkopf (2) zum Umspritzen des Metallrohres (10) mit einer Kunststoffschicht (23, 24) angeordnet ist.

6. Vorrichtung nach Anspruch 5,
**dadurch gekennzeichnet,**
daß der Querspritzkopf (2) zwei über ihre gesamte Länge getrennte Zufuhrkanäle (25, 26) für Haftvermittler (23) und Kunststoff (24) zur Außenseite des Metallrohres (10) aufweist.

7. Vorrichtung nach den Ansprüchen 5 und 6,
**dadurch gekennzeichnet,**
daß die Zufuhrkanäle (25, 26) für Haftvermittler (23) und Kunststoff (24) in Strömungsrichtung konisch verjüngend ausgebildet sind.

8. Vorrichtung nach einem der Ansprüche 5 bis 7,
**dadurch gekennzeichnet,**
daß jeweils ein gemeinsamer Extruder für innere und äußere Haftvermittlerschicht (11, 23) und/oder innere und äußere Kunststoffschicht (12, 24) vorgesehen ist.

## Claims

1. Device for the continuous production of a metal-plastic composite pipe with an extrusion die (5) with two concentric annular channels (13, 14) for feeding an interior adhesion promoter layer and plastic layer (11, 12) into a metal pipe which is produced from a strip material (8) by rolling and longitudinal welding, the exterior wall of the extrusion die (5) serving as abutment for a welding head (6) for welding the longitudinal edges of the rolled strip material (8) to produce the metal pipe, and the two annular channels (13, 14) for the interior adhesion promoter layer (11) and plastic layer (12) extending separately in the flow direction as far as their outlet from the extrusion die (5), characterized in that, in the production direction, a sealing plug (21) arranged downstream of the extrusion die (5) and spaced apart from the latter closes the interior cross-section of the pipe consisting of metal pipe (10), adhesion promoter (11) and plastic layer (12), while at the same time the space (20) between the end (15) of the extrusion die (5) and sealing plug (21) is provided with a pressurized-gas feed (18).

2. Device according to Claim 1, characterized in that the two annular channels (13, 14) terminate at a common end face (15), extending transversely to the flow direction, of the extrusion die (5).

3. Device according to Claim 1, characterized in that the pressurized-gas feed is formed by a longitudinal channel (18) of the extrusion die (5) which, seen in the cross-section of the extrusion die (5), runs within the two annular channels (13, 14) for the adhesion promoter layer (11) and plastic layer (12).

4. Device according to one of the preceding claims, characterized in that the welding head comprises at least one welding roll (6), preferably for ultrasonic welding.

5. Device according to one of the preceding claims, characterized in that, downstream of the extrusion die (5), in the production direction of the pipe, there is arranged in a manner known per se a crosshead (2) for extrusion-coating the metal pipe (10) with a plastic layer (23, 24).

6. Device according to Claim 5, characterized in that the crosshead (2) has two feed channels (25, 26), separated along their entire length, for adhesion promoter (23) and plastic (24) to the outside of the metal pipe (10).

7. Device according to Claims 5 and 6, characterized in that the feed channels (25, 26) for adhesion promoter (23) and plastic (24) are designed so as to taper conically in the flow direction.

8. Device according to one of Claims 5 to 7, characterized in that a common extruder is provided for interior and exterior adhesion promoter layer (11, 23) and/or interior and exterior plastic layer (12, 24) respectively.

## Revendications

1. Dispositif pour la fabrication en continu d'un tuyau composite en métal/matière plastique, comportant une base d'extrusion (5) avec deux canaux annulaires concentriques (13, 14) pour l'amenée, dans un tube métallique, d'une couche intérieure de matière plastique et d'adhésif intermédiaire (11, 12), ledit tube métallique étant fabriqué à partir d'un matériau en bande (8) par enroulement et soudure longitudinale, dispositif dans lequel la paroi extérieure de la base d'extrusion (5) sert d'appui à une tête de soudure (6) pour le soudage des arêtes longitudinales du matériau en bande enroulé (8) en vue de l'obtention du tube métallique, et les deux canaux annulaires (13, 14) pour la couche intermédiaire d'adhésif (11) et la couche de matière plastique (12) s'étendent séparément dans la direction d'écoulement jusqu'à leur sortie de la buse d'extrusion (5),
**caractérisé en ce que**
dans la direction de fonctionnement de la buse d'extrusion (5), en aval de celle-ci et en étant éloigné, est disposé un noyau compact (21) obturant la section transversale intérieure du tube se composant du tube métallique (10), de la couche intermédiaire d'adhésif (11) et de la couche de matière plastique (12), l'espace (20) entre l'extrémité (15) de la base d'extrusion (5) et le noyau compact (21) comportant une arrivée de gaz sous pression (18).

2. Dispositif selon la revendication 1,
**caractérisé en ce que**
les deux canaux annulaires (13, 14) se terminent au niveau d'une surface frontale commune (15) de la buse d'extension (5), surface transversale à la direction d'écoulement.

3. Dispositif selon la revendication 1,
**caractérisé en ce que**
l'arrivée de gaz sous pression consiste en un canal longitudinal (18) pratiqué dans la buse d'extrusion (5), et qui, vu dans la section transversale de la base d'extrusion (5), s'étend à l'intérieur des deux canaux annulaires (13, 14) prévus pour la couche intermédiaire d'adhésif (11) et la couche de matière plastique (12).

4. Dispositif selon l'une des revendications précédentes,
**caractérisé en ce que**
la tête de soudure comporte au moins un cylindre de soudure (6), de préférence pour la soudure par ultra-sons.

5. Dispositif selon l'une des revendications précédentes,
**caractérisé en ce que,**
dans la direction de l'achèvement du tube après la buse d'extrusion (5) est disposée, de façon connue, une tête d'injection transversale (2) en vue de l'injection d'une couche de matière plastique (23, 24) autour du tube métallique (10).

6. Dispositif selon la revendication 5,
**caractérisé en ce que**
la tête d'injection transversale (2) présente deux canaux d'alimentation séparés (25, 26) pour la couche intermédiaire d'adhésif (23) et la matière plastique (24) sur la face extérieure du tube métallique (10).

7. Dispositif selon les revendications 5 et 6,
**caractérisé en ce que**
les canaux d'alimentation (25, 26) pour la couche intermédiaire d'adhésif (23) et la matière plastique (24) se rétrécissent coniquement dans la direction d'écoulement.

8. Dispositif selon l'une des revendications 5 à 7,
**caractérisé en ce qu'**
il est prévu, selon le cas, un extrudeur commun pour la couche intérieure et la couche extérieure intermédiaires d'adhésif (11, 23), et/ou la couche interne et la couche externe de matière plastique (12, 24).
